(19) Europäisches Patentamt
European Patent Office
Office européen des brevets

(11) **EP 1 180 337 B1**

(12) **EUROPEAN PATENT SPECIFICATION**

(45) Date of publication and mention
of the grant of the patent:
**07.05.2008 Bulletin 2008/19**

(51) Int Cl.:
***A42B 3/04*** *(2006.01)*    ***A42C 2/00*** *(2006.01)*

(21) Application number: **01306977.8**

(22) Date of filing: **16.08.2001**

(54) **Alignment tool and method for mounting visual systems to helmets**

Gerät zum Ausrichten und Verfahren zum Befestigen von optischen Systemen an einem Helm

Outil d'alignement et méthode pour monter des systèmes optiques sur un casque

(84) Designated Contracting States:
**FR GB**

(30) Priority: **17.08.2000 US 640442**
**23.07.2001 US 910710**

(43) Date of publication of application:
**20.02.2002 Bulletin 2002/08**

(73) Proprietor: **Gentex Corporation**
**Carbondale**
**Pennsylvania 18407 (US)**

(72) Inventor: **Beautz, Joseph A.**
**Forest City, PA 18421 (US)**

(74) Representative: **Goodenough, Nigel et al**
**A.A. Thornton & Co.**
**235 High Holborn**
**London WC1V 7LE (GB)**

(56) References cited:
**EP-A- 0 664 471**      **EP-A- 0 813 823**
**WO-A-94/14349**      **WO-A-97/40716**
**GB-A- 2 332 852**      **US-A- 5 708 988**

**Description**

The invention relates to helmet mounted visual display systems, and more particularly, to an alignment tool and method for fitting a helmet to a user for accurate alignment with the helmet mounted visual display systems.

Various forms of military helmets are known according to the prior art. These helmets are constructed to protect the wearer's head against injury while providing communication and life support. In addition modem combat requires military personnel to utilize certain helmet-mounted electronic systems, for example night vision systems and helmet mounted displays.

A problem arises when military personnel need to train with different electronic systems, for example, outer helmet mounted displays for several types of aircraft. These displays have exacting requirements for positioning relative to the wearer's eyes. It has been determined that custom fitted inner helmets are necessary to meet such requirements. However, the outer helmets are too costly to custom fit every crew member which will maintain or fly the aircraft.

Ideally, a custom fit inner helmet is provided to each individual. For example, an Inner Helmet Assembly pursuant to US Patent 5,584,073.

US 5866826, upon which the pre-characterising clause of claim 1 is based on, discloses a known method for positioning a night vision device with respect to a helmet to which it has to be fixed, consisting of determining the position of the support of the device with respect to significant points of the user's head, in contact with the helmet, and then copying these relative positions on a supporting tool bearing the helmet and the support of the night vision device, and forming thickness shims between the helmet and the support. It also discloses a device for the implementation of this method.

According to a first aspect of the invention, there is provided a tool for aligning a helmet mounted visual system, the helmet having at least one connection point for receiving and securing the visual system to the helmet characterized in that, the alignment tool comprises: at least one latch point for connecting to the at least one connection point on the helmet; and means for determining the spatial relationship between the at least one connection point and the user's eyes.

According to a second aspect of the invention, there is provided a method of positioning a helmet display S at a viewing distance $V_D$ from a first line $E_L$ that is tangent to both of the front eyeball surfaces of a viewer, characterized in that the method comprises the steps of: providing at least one connection point on the helmet defining a connection line $C_L$ extending parallel to the first line $E_L$ and separated therefrom by a first vector $V_1$; providing an alignment tool having at least one latch point defining a latch line $L_L$ related to the display S defined by a second Vector $V_2$; and mounting the alignment tool to said at least one connection point on the helmet to align said latch line $L_L$ with said connection line $C_L$, wherein a difference in magnitude between said first and second vectors is said viewing distance $V_D$.

Preferably, the helmet is an inner helmet, wherein the tool utilises its latch assembly to attach to the inner helmet in the same manner as the ultimate outer helmet. This enables the tool to custom align the latch points on the inner helmet for each individual. The custom fittings are then secured to maintain the alignment in a reproducible manner. Accordingly, every custom fitted inner helmet provides a standard platform.

The outer helmets, which do not form part of the invention, are then equipped with a uniform capture configuration to attach onto this standard platform via the same latch assembly as the tool.

Furthermore, the outer device or helmet includes a pair of inwardly-facing mounting surfaces that face the temple panels in the installed position. Ideally, the temple panels and mounting surfaces are all substantially parallel to each other. An arcuate channel assembly or track is disposed on each mounting surface for capturing a striker. The arc of the channel assembly corresponds to the curve generated by pivoting the outer device from front-to-back over a crown portion of the inner helmet into an installed position. For locking, quarter-turn fasteners located on the outer helmet may extend through holes in the lower, rear portion of the inner helmet to engage an interiorly-secured retention bar.

The channel assembly includes a base portion disposed adjacent the mounting surface, a central spacer portion and an upper portion. The tip end of the striker slidingly contacts the base portion during mounting of the outer helmet. The central spacer portion comprises a pair of arms spaced from the striker head by a distance D. The upper portion comprises a pair of rails spaced from the striker neck by a distance d that is less than D. The rails guide the neck portion along the length of the channel assembly and keep the head out of contact with the central spacer portion. The head and neck portions of the striker have a generally T-shaped cross-sectional profile. A concavity on the head or neck portion slidingly contacts facing regions of the upper portion.

The interchangeable latch assembly of the alignment tool according to the invention is preferably fitted for an outer helmet mounted display as follows. The inner helmet is placed onto the user and the internal fittings, straps, pads and/or cushions are adjusted to an approximate fit. The fitting fixture is installed onto the strikers. The fitting fixture includes fixed alignment guides that are used to view the user's eyes along an eye line $E_L$ that is tangent to both of the front eyeball surfaces. Once aligned the connection line $C_L$ of the strikers is parallel to and separated from the eye line $E_L$ by a known and preset first vector $V_1$ that is the same for all users.

An outer helmet display has a desired viewing distance $V_D$ from the users eyes. The outer helmet possesses a latch line $L_L$ that will be coincident with the inner helmet connection line $C_L$. The distance between the outer helmet latch line $L_L$ and the display is defined by a second vector $V_2$. The viewing distance $V_D$ is equal to $V_2$ minus $V_1$. Once $V_1$ is established, the second vector $V_2$ can be adjusted to obtain any desired viewing distance $V_D$.

The inner helmet connection line $C_L$ is located in the quadrant above and rearwardly of the viewer's eyeballs. In the vertical direction, $C_L$ is generally between the viewer's eyes and the top of the head. The connection points comprise left and right connection points which are disposed in corresponding left and right vertical planes which are outwardly spaced from the viewer's head. The latch points comprise left and right latch points which pivot within corresponding left and right vertical planes which are outwardly spaced from the viewer's head. The viewing distance $V_D$ may extend along a horizontal line of sight wherein $E_L$ is perpendicular to $V_D$. Where the first and second vectors $V_1$ and $V_2$ are in a common plane with the line of sight, $V_1$ and $V_2$ are perpendicular to $E_L$.

In the accompanying drawings to which reference is made in the instant specification and which are to be read in conjunction therewith and in which like reference numerals are used to indicate like parts in the various views:

FIG.1A is a left-front-top side perspective view of an inner and outer helmet for use with the alignment tool according to the invention;

FIG.1B is a left-front-top side perspective view of the helmets of FIG.1A, wherein the outer helmet is initially engaging the inner helmet latch component;

FIG.1C is a left-front-top side perspective view of the helmets of FIG.1A, wherein the outer helmet is fully installed on the inner helmet;

FIG.2A is a front-lower-left side perspective view of an embodiment of a striker adapted for mounting to the inner helmet of FIG.1A;

FIG.2B is an exploded view of an embodiment of an arcuate channel assembly that is adapted for mounting to the outer helmet of FIG.1A.

FIG.3 is a cross-sectional view of the engaged latch between the helmets of FIG.1A taken along the line III-III from FIG.1C; and

FIG.4 is a left-front-top side perspective view of an alignment tool according to the invention adapted for mounting on to the striker of he inner helmet of FIG. 1A.

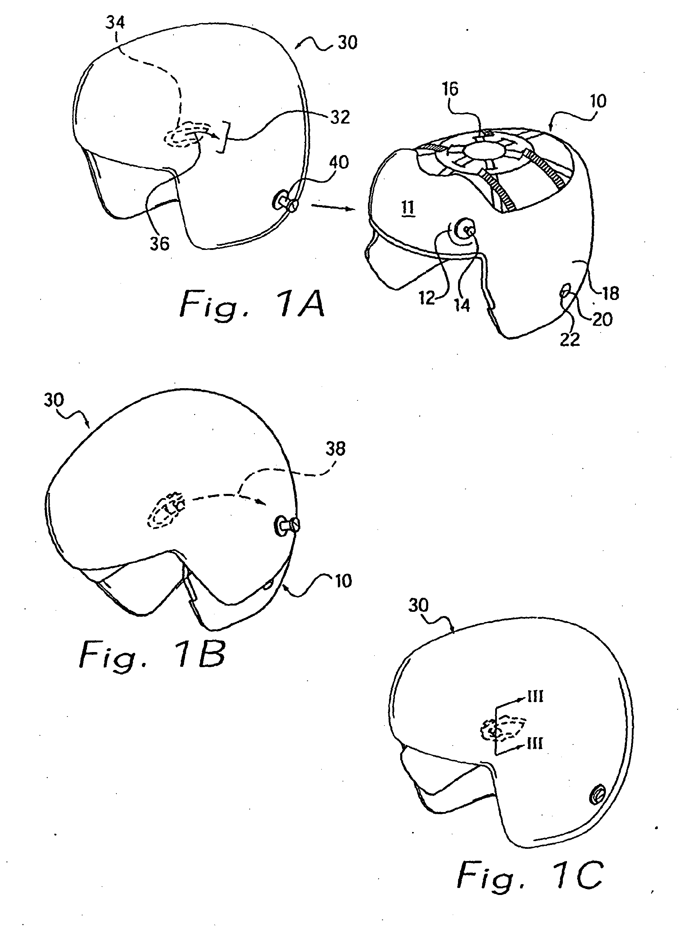

Referring now in detail to the drawings, and in particular FIGS.1A, 1B and1C, there is shown a series of views illustrating mounting of an outer helmet 30 onto an inner helmet 10, which do not form part of the invention that represent background art that is useful for understanding it. The inner helmet may be of any type designed for a two-part helmet, for example, a custom-fitted inner helmet assembly. Once properly fitted, the inner helmet operates as a standard platform for mounting various types of outer helmets. The mechanism for obtaining this standard platform on the inner helmet is the interchangeable latch assembly of the alignment tool according to the invention. Thus, a highly specialized or very expensive outer helmet can be mounted onto many different custom-fitted inner helmets.

Inner helmet 10 includes a front forehead dome 11 that generally overlies the wearer's forehead. On each side of front forehead dome 1 there is one temple panel 112. The left side temple panel 12, as viewed from the wearer's perspective, is shown in FIG. 1A. The temple panels are generally located above, forwardly and outwardly from the wearer's temples. The temple panels are flat surfaces, generally parallel to each other. A striker 14 is mounted onto each flat temple panel 12.

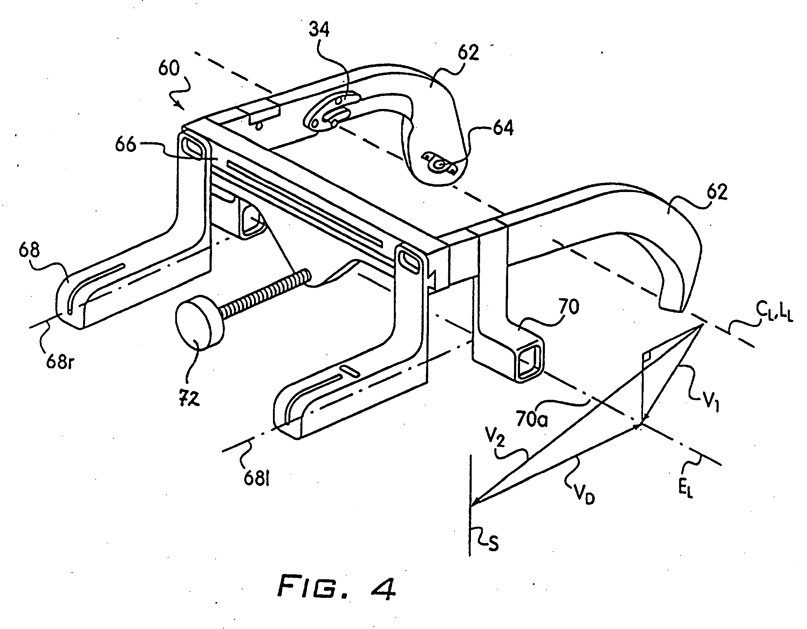

A crown portion 16 is disposed behind front forehead dome 11. Inner helmet 10 also includes a rear portion 18 which has an aperture 20 formed therein for exposing a section of an internally secured retention bar 22. Crown portion 16 and other internal fittings, pads, straps and/or cushions may be adjusted to alter the position at which inner helmet 10 sits on the wearer's head. Fitting is facilitated by the use of an alignment tool 60 illustrated in FIG. 4, which will be discussed in greater detail below. More particularly, fitting consists of aligning strikers 14 to a predetermined location and orientation with respect to the wearer's eyes.

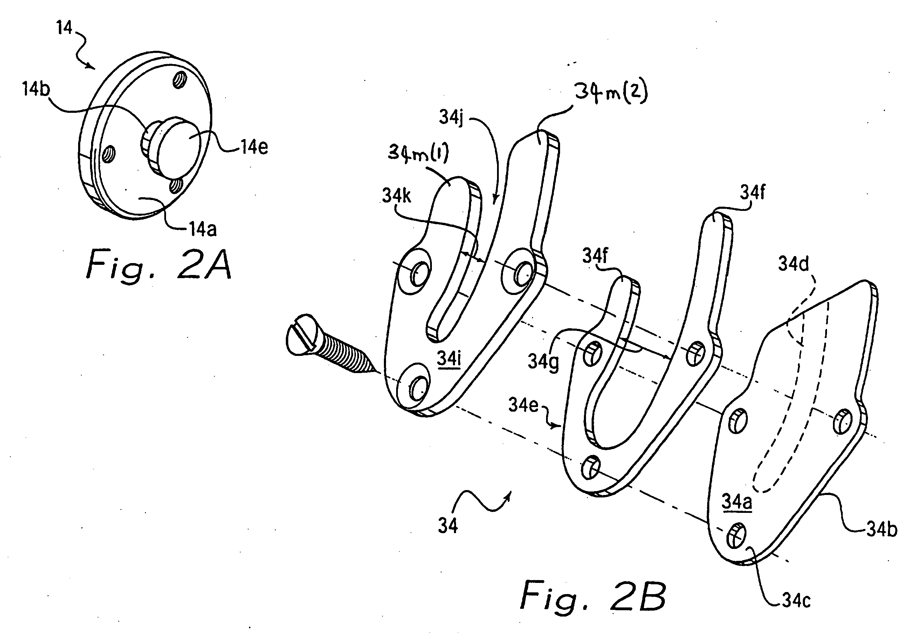

As can be seen in FIG. 2A, striker 14 includes a dome-shaped base 14a provided with three threaded bores, for example. Machine screws with suitable sized heads extend from the inside of inner helmet 10 through correspondingly sized holes in temple panel 12 and are screwed into the bores on base 14a. In the embodiment shown the central part of the striker base 14a extends upwardly into a neck 14b that terminates in a head 14e.

The interior of outer helmet 30 is provided with a mounting surface 32 in the forward part of outer helmet 30. One mounting surface is provided on either side. The mounting surfaces generally face each other and are generally parallel to each other. An arcuate track or channel assembly 34 is secured onto each mounting surface 32. As can be seen in FIG. 2B, arcuate channel assembly 34 consists generally of a base portion 34a, a central spacer portion 34e and an upper portion 34i. Components 34a, 34e and 34i include apertures in registration with each other. In the embodiment shown, each component has three apertures in a triangular configuration to accommodate screws. The screws pass through the components and are secured into mounting surface 32.

Base portion 34a includes a rear-side 34b that is in contact with mounting surface 32. The front side 34c faces central spacer portion 34e and includes a contact region 34d. The central spacer portion 34e includes a pair of arms 34f(1) and 34f(2) distanced from each other by a nominal arm spacing 34g. Upper portion 34i includes a pair of rails 34m(1) and 34m(2) separated by a slot 34j which overlies the gap between rails 34f(1) and 34f(2). The width of slot 34j is designated as the nominal rail spacing 34k.

As can be seen in FIGS. 1A, 1B and 1C, the arcuate channel assembly is oriented on mounting surface 32 so that striker 14 is able to enter the open end of slot 34j in the position illustrated in FIG. 1B. Rail 34m (1) is the shorter rail and is provided with a smooth rounded end to allow neck 14b to easily slide past it as outer helmet 30 is moved downwardly over inner helmet 10. Rail 34m(2) is the longer rail and is designed to engage neck 14b and guide it in the direction of the arrow for reference numeral 34j. Slot 34j has the shape of an arc 36 that conforms to the shape of a curve 38. Outer helmet 30 follows curve 38 during mounting as the outer helmet pivots into the fully installed position illustrated in FIG. 1C. During the movement between FIGS. 1B and 1C, striker 14 is guided through slot 34j into the terminal position at the base of slot 34j.

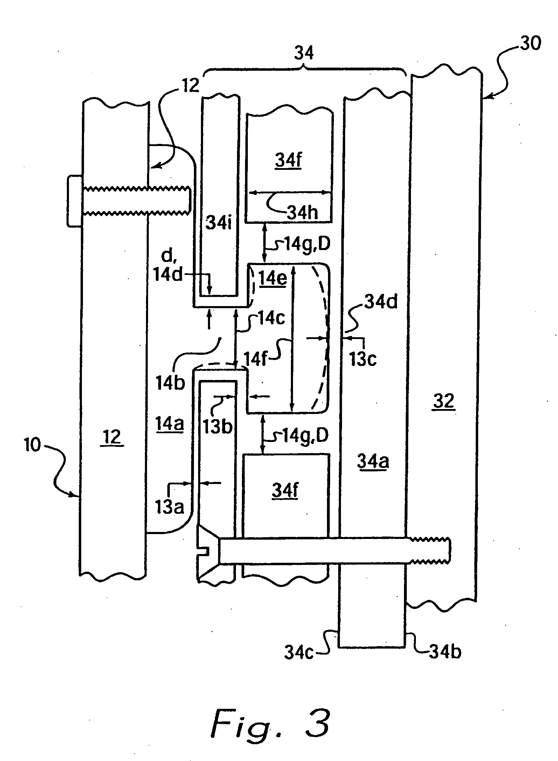

FIG. 3 illustrates the spacing between various portions of striker 14 and arcuate channel assembly 34. Striker 14 includes a neck 14b having a neck diameter 14c and a head 14e having a head diameter 14f. Between neck 14b and upper portion 34i there is provided a radial neck clearance 14d on the order of magnitude of several thousandths of an inch. Radial neck clearance 14d is also referred to as d. These distances relate to nominal rail spacing 34k from FIG. 2B as follows:

$$34k = 14c + ( 2 \times 14d )$$

or

$$34k = 14c + ( 2 \times d )$$

In contrast, a radial head clearance 14g is significantly larger, on the order of magnitude of several hundredths of an inch. Radial head clearance 14g is also referred to as D. These distances relate to nominal are spacing 34g as follows:

$$34g = 14f + ( 2 \times 14g )$$

or

$$34g = 14f + ( 2 \times D )$$

The relative difference in clearances 14d (aka d) and 14g (aka D) insures that head 14e will avoid radial contact with arms 34f of central spacer portion 34e during mounting and removing of outer helmet 30. This relationship may be represented as follows:

$$14g > 14d$$

or

$$D > d$$

Accordingly, contact and frictional resistance in the radial direction will only occur between neck 14b and upper portion 34i. In order to minimize the aforementioned friction, striker 14 is made from a different metallic material than upper portion 34i or one of the components is provided with a metallic coating different than the other component. In addition neck 14b may be provided with a concave chamfer, as shown in dotted line, to reduce the radial contact area from a line to two points.

In the left-right direction of the drawing three clearances are specified between striker 14 and upper portion 34i and contact region 34d of arcuate channel assembly 34. Clearances 13b and 13c may be of the same distance, on the order of magnitude of several thousandths of an inch. These distances relate to the overall head height as follows:

Height of Head 14e (measured left-to right) = 34h - 13b - 13c

Clearance 13a is approximately twice that of either 13b or 13c, on the order of magnitude of hundredths of an inch. All three clearances 13a, 13b and 13c are measured with striker 14 centrally positioned in the left-right direction, as illustrated. As a result, the relatively large surface area of base dome 14a is restricted from contacting the facing surface of upper portion 34i. Rather, any left-right movement of striker 14 would result in head 14e contacting either upper portion 34i or base portion 34a. To minimize the contact areas, the left side of head 14e that faces upper portion 34i is provided with a concave chamfer, as illustrated in the drawing in dotted line. The top of head 14e that faces base portion 34a is provided with a convex or dome shaped profile, also illustrated in the drawing in dotted line. Accordingly, upon leftward movement of striker 14, head 14e would contact upper portion 34i along an arc shaped line. Upon displacement of striker 14 to the right, a small circular patch of head 14e would slide along contact region 34d of base portion 34a.

Initially the degree of frictional contact between striker 14 and arcuate channel assembly 34 depends upon the proper spacing of the striker and arcuate channel mounting surfaces on inner helmet 10 and outer helmet 30, respectively. In addition, the mounting surfaces must be parallel to each other so that the clearances are maintained during pivoting of the outer helmet during installation.

Figure 4 shows a perspective view of an alignment tool 60 according to the invention for assisting in the helmet fitting process for mounting and aligning helmet visual display systems according to an embodiment of the invention. Alignment tool 60 includes side arms 62 and an inter pupilary distance (IPD) scale 66 that connects the two side arms in a U-shape configuration. Each side arm 62 includes at least one latch point 34 on an internal side thereof, a fastener 64 and a sighting reticle 70. The IPD scale 66 includes two slidably mounted front sighting/alignment guides 68r and 681 and an eye relief adjuster 72. IPD scale 66 ordinarily includes measurement markings (not shown) that allow the exact measurement of the helmet wearer's IPD when sighting reticles 68r and 681 are aligned with the user's pupils.

The latch points 34 enable tool 60 to attach to respective connection points on a helmet. These connection points are also the connection points for the helmet mounted visual display system. Thus, the connection points on which latch points 34 connect, operate to fix a frame of reference for the alignment of the visual system with the respective helmet wearers eyes.

When alignment tool 60 is mounted on a helmet using latch points 34, the left and right side sighting reticles 70 are used to align the helmet with respect to the user's eyeballs Eye relief adjuster 72 can be used to move the helmet fore and aft with respect to the user's head in order to obtain the required tangential alignment with the front surface of the user's eyeballs. The eye line $E_L$ (described later) further describes this alignment. Once the fore/aft alignment has been made, the IPD measurement can be taken using front sighting reticles 68r and 681 and IPD scale 66. Once the helmet has been aligned using the alignment tool 60, the helmet is sized to that wearer so that the obtained alignment with the wearer's eye is replicated every time they don their helmet.

The interchangeable latch system is installed and used as follows. To begin the custom fitting procedure, the user dons inner helmet 10 equipped with strikers 14. Alignment tool 60 is mounted onto the strikers in the exact same manner as an outer helmet. The internal fittings, strap, pads, and/or cushions on inner helmet 10 are adjusted until the eye alignment line $E_L$ becomes tangentially aligned with to the front portion of the user's eyeballs. The left/right eye alignment guides 68r and 681 are used to insure that alignment line $E_L$ is centered on the eyeball in the vertical direction. This establishes a first vector $V_1$ between a connection line $C_L$ extending through the strikers and alignment line $E_L$. The internal fittings, straps, pads, and/or cushions of inner helmet 10 are then tightened or secured to insure that this alignment is always reproduced whenever the inner helmet is donned.

By this fitting procedure, the inner helmets are custom fitted to their respective users. If necessary, several sizes of inner helmets may be provided to accommodate a large anthropometric range of users. The strikers on the various custom fitted helmets, then provide a standard platform onto which an outer helmet can be mounted. The standardization consists of vector $V_1$ being the same for all users.

Both arcuate channel assemblies 34 are installed onto outer helmet 30 so that slots 34j are oriented approximately horizontally when the helmet is upright. As outer helmet 30 is dropped down on to inner helmet 10, both strikers 14 pass beyond lower rails 34f. Necks 14b of the strikers then contact upper rails 34m(2) of upper portion 34i. Outer helmet 30 is rotated rearwardly over a crown portion of the inner helmet. When the outer helmet reaches the terminal position shown in FIG. 1C, fasteners 40 are actuated to prevent inadvertent forward pivoting of outer helmet 30.

Once installed the latch line $L_L$ of arcuate channel assembly 34 becomes aligned with the connection line $C_L$ of striker 14. A second vector $V_2$ extends from the latch line $L_L$ to a viewing surface or display S. The user's viewing distance $V_D$ is the difference in magnitude of the two vectors ($V_2$-$V_1$). If the display is oriented horizontally outward from the viewer's eyeballs, then the difference between the vectors $V_D$ would only possess a horizontal component. Accordingly, if $V_1$ is known from alignment fixture 60, then arcuate channel assemblies 34 can be mounted onto outer helmets at a distance $V_2$ from display surfaces S to achieve a desired viewing distance $V_D$.

**Claims**

1. A tool (60) for aligning a helmet mounted visual system, the helmet (10) having at least one connection point (14) for receiving and securing the visual system to the helmet (10) **characterized in that** the alignment tool (60) comprises: at least one latch point (34) for connecting to the at least one connection point (14) on the helmet (10); and means for determining the spatial relationship between the at least one connection point (14) and the user's eyes.

2. The alignment tool (60) according to claim 1, wherein said determining means comprises: right and left side sighting reticles (70) for visually indicating alignment of the helmet (10) to the user's eyeballs; an eye relief adjuster (72) for selectively adjusting fore and aft alignment of the helmet (10) with respect to the user's head to achieve a predetermined alignment; and means for determining an inter pupulary distance (IPD) of a user wearing the helmet.

3. The alignment tool (60) according to claim 2, wherein said IPD determination means comprises; an IPD scale (66) for providing IPD measurement information; and right and left front sighting reticles (68r,68l) operably connected with said IPD scale (66) for providing the IPD measurement information for the user when said right and left front sighting reticles (68r,681) visually indicate alignment of the helmet (10) with the user's pupils.

4. The alignment tool (60) according to claim 2, wherein said predetermined alignment is tangential with a front portion of the user's eyeballs.

5. The alignment tool (60) according to claim 1 for aligning and positioning a display of the helmet mounted visual system, wherein the helmet (10) has a pair of opposing connection points (14) for receiving and securing the visual system to the helmet, and wherein the alignment tool (60) comprises: a pair of opposing side arms (62) each having a latch point (34) for connecting to the corresponding connection point (14) on the helmet (10); right and left side sighting reticles (70) connected to said side arms for visually indicating horizontal alignment of the helmet (10) to the user's eyeballs; an IPD scale (66) for providing the IPD measurement information for the user when said right and left front sighting reticles (68r,68l) operably connected with said IPD scale (66) for providing the IPD measurement information for the user when said right and left front sighting reticles (68r, 68l) visually indicate vertical alignment of the helmet (10) with the user's pupils.

6. The tool (60) according claim 5, further comprising an eye relief adjuster (72) for selectively adjusting the horizontal alignment of the helmet (10) with respect to the user's head to achieve a predetermined horizontal alignment.

7. The tool (60) according claim 6, wherein said predetermined horizontal alignment is achieved when said left and right side sighting reticles (70) indicate tangential alignment with a front portion of the user's right and left eyeballs.

8. The alignment tool (60) according to claim 5, wherein said pair of opposing side arms (62) and said IPD scale (66) form a substantially U-shaped configuration for the tool (60).

9. A method of positioning a helmet display S at a viewing distance $V_D$ from a first line $E_L$ that is tangent to both of the front eyeball surfaces of a viewer, **characterized in that** the method comprises the steps of: providing at least one connection point (14) on the helmet (10) defining a connection line $C_L$ extending parallel to the first line $E_L$ and separated therefrom by a first vector $V_1$; providing an alignment tool (60) having at least one latch point (34) defining a latch line $L_L$ related to the display S defined by a second Vector $V_2$; and mounting the alignment tool (60) to said at least one connection point (14) on the helmet (10) to align said latch line $L_L$ with said connection line $C_L$, wherein a difference between said first and second vectors is said viewing distance $V_D$.

10. The method of claim 9, wherein said viewing distance $V_D$ extends generally along a horizontal line of sight of the viewer and wherein the line of sight is perpendicular to the first line $E_L$.

11. The method of claim 9, wherein said first vector $V_1$ and said second vector $V_2$ are disposed in a common plane with the horizontal line of sight and wherein said first and second vectors extend perpendicular to the first line $E_L$.

12. The method of claim 9, wherein vertical components of said first and second vectors are approximately the same.

13. The method of claim 11, wherein a difference between the horizontal components of said first and second vectors is equal to said viewing distance $V_D$.

14. The method of claim 9, wherein said connection line $C_L$ is disposed above the viewer's head and rearwardly of the viewer's eyeballs.

15. The method of claim 9, wherein said connection points (14) comprise left and right connection points which are disposed within corresponding left and right vertical planes which are outwardly spaced from the viewer's head.

16. The method of claim 9, wherein said latch points (34) comprise left and right latch points which pivot within corresponding left and right vertical planes which are outwardly spaced from the viewer's head.

**Patentansprüche**

1. Werkzeug (60) zum Ausrichten eines helmmontierten Sichtsystems, wobei der Helm (10) wenigstens einen Verbindungspunkt (14) zum Aufnehmen und Befestigen des Sichtsystems an dem Helm aufweist, **dadurch gekennzeichnet, dass** das Ausrichtwerkzeug (60) umfasst: wenigstens einen Verriegelungspunkt (34) zum Verbinden mit dem wenigstens einen Verbindungspunkt (14) an dem Helm (10); und eine Einrichtung zum Bestimmen der räumlichen Beziehung zwischen dem wenigstens einen Verbindungspunkt (14) und den Augen des Benutzers.

2. Ausrichtwerkzeug (60) nach Anspruch 1, wobei die Bestimmungseinrichtung umfasst: ein rechtes und linkes seitliches Einrichtretikel (70), um die Ausrichtung des Helmes (10) auf die Augäpfel des Benutzers visuell anzuzeigen; eine Augenentlastungs-Einstelleinrichtung (72) zum selektiven Einstellen der Längsausrichtung des Helmes (10) in Bezug auf den Kopf des Benutzers, um eine vorgegebene Ausrichtung zu erreichen; und eine Einrichtung zum Bestimmen eines Augenabstands eines Benutzers, der den Helm trägt.

3. Ausrichtwerkzeug (60) nach Anspruch 2, wobei die Augenabstands-Bestimmungseinrichtung umfasst: eine Augenabstandsskala (66) zum Bereitstellen von Augenabstands-Messinformationen; und ein rechtes und linkes vorderes Einrichtretikel (68r, 68l), die funktionsfähig mit der Augenabstandsskala (66) verbunden sind, um die Augenabstands-Messinformationen für den Benutzer bereitzustellen, wenn das rechte und linke vordere Einrichtretikel (68r, 68l) die Ausrichtung des Helmes (10) auf die Pupillen des Benutzers visuell anzeigen.

4. Ausrichtwerkzeug (60) nach Anspruch 2, wobei die vorgegebene Ausrichtung zu einem vorderen Teil der Augäpfel des Benutzers tangential ist.

5. Ausrichtwerkzeug (60) nach Anspruch 1 zum Ausrichten und Positionieren einer Anzeige des helmmontierten Sichtsystems, wobei der Helm (10) ein Paar einander gegenüberliegende Verbindungspunkte (14) zum Aufnehmen und Befestigen des Sichtsystems an dem Helm umfasst und wobei das Ausrichtwerkzeug (60) umfasst: ein Paar einander gegenüberliegende Seitenarme (62), die jeweils einen Verriegelungspunkt (34) zum Verbinden mit dem entsprechenden Verbindungspunkt (14) an dem Helm (10) aufweisen; ein rechtes und linkes seitliches Einrichtretikel (70), die mit den Seitenarmen verbunden sind, um die horizontale Ausrichtung des Helmes (10) auf die Augäpfel des Benutzers visuell anzuzeigen; eine Augenabstandsskala (66) zum Bereitstellen der Augenabstands-Messinformationen für den Benutzer, wenn das rechte und linke vordere Einrichtretikel (68r, 68l) funktionsfähig mit der Augenabstandsskala (66) verbunden sind, um die Augenabstands-Messinformationen für den Benutzer bereitzustellen, wenn das rechte und linke vordere Einrichtretikel (68r, 68l) die vertikale Ausrichtung des Helmes (10) auf die Pupillen des Benutzers visuell anzeigen.

6. Werkzeug (60) nach Anspruch 5, des Weiteren umfassend eine Augenentlastungs-Einstelleinrichtung (72) zum selektiven Einstellen der horizontalen Ausrichtung des Helmes (10) in Bezug auf den Kopf des Benutzers, um eine vorgegebene horizontale Ausrichtung zu erreichen.

7. Werkzeug (60) nach Anspruch 6, wobei die vorgegebene horizontale Ausrichtung erreicht wird, wenn das linke und rechte seitliche Einrichtretikel (70) die tangentiale Ausrichtung auf einen vorderen Teil des rechten und linken Augapfels des Benutzers anzeigen.

8. Ausrichtwerkzeug (60) nach Anspruch 5, wobei das Paar einander gegenüberliegende Seitenarme (62) und die Augenabstandsskala (66) eine im Wesentlichen U-förmige Konfiguration für das Werkzeug (60) ausbilden.

9. Verfahren zum Positionieren einer Helmanzeige S in einem Betrachtungsabstand $V_D$ zu einer ersten Linie $E_L$, die Tangente zu beiden vorderen Augapfelflächen eines Betrachters ist, **dadurch gekennzeichnet, dass** das Verfahren die Schritte umfasst: Bereitstellen wenigstens eines Verbindungspunktes (14) an dem Helm (10), der eine Verbindungslinie $C_L$ definiert, die sich parallel zu der ersten Linie $E_L$ erstreckt und durch einen ersten Vektor $V_1$ davon getrennt ist; Bereitstellen eines Ausrichtwerkzeuges (60) mit wenigstens einem Verriegelungspunkt (34), der eine Verriegelungslinie $L_L$ bezüglich der Anzeige S definiert, die durch einen zweiten Vektor $V_2$ definiert wird; und Anbringen des Ausrichtwerkzeuges (60) an dem wenigstens einen Verbindungspunkt (14) an dem Helm (10), um die Verriegelungslinie $L_L$ an der Verbindungslinie $C_L$ auszurichten, wobei eine Differenz bei dem Ausmaß zwischen dem ersten und zweiten Vektor der Betrachtungsabstand $V_D$ ist.

10. Verfahren nach Anspruch 9, wobei sich der Betrachtungsabstand $V_D$ im Allgemeinen entlang einer horizontalen Sichtlinie des Betrachters erstreckt und wobei die Sichtlinie zu der ersten Linie $E_L$ senkrecht ist.

11. Verfahren nach Anspruch 9, wobei der erste Vektor $V_1$ und der zweite Vektor $V_2$ in einer gemeinsamen Ebene mit der horizontalen Sichtlinie angeordnet sind und wobei sich der erste und zweite Vektor senkrecht zu der ersten Linie $E_L$ erstrekken.

12. Verfahren nach Anspruch 9, wobei vertikale Komponenten des ersten und zweiten Vektors ungefähr gleich sind.

13. Verfahren nach Anspruch 11, wobei eine Differenz zwischen den horizontalen Komponenten des ersten und zweiten Vektors dem Betrachtungsabstand $V_D$ entspricht.

14. Verfahren nach Anspruch 9, wobei die Verbindungslinie $C_L$ über dem Kopf des Betrachters und hinter den Augäpfeln des Betrachters angeordnet ist.

15. Verfahren nach Anspruch 9, wobei die Verbindungspunkte (14) linke und rechte Verbindungspunkte umfassen, die in entsprechenden linken und rechten vertikalen Ebenen angeordnet sind, die von dem Kopf des Betrachters aus nach außen beabstandet sind.

**16.** Verfahren nach Anspruch 9, wobei die Verriegelungspunkte (34) linke und rechte Verriegelungspunkte umfassen, die in entsprechenden linken und rechten vertikalen Ebenen schwenken, die von dem Kopf des Betrachters aus nach außen beabstandet sind.

**Revendications**

**1.** Outil (60) d'alignement d'un système visuel monté sur un casque, le casque (10) comportant au moins un point de raccordement (14) pour recevoir et fixer le système visuel au casque (10), **caractérisé en ce que** l'outil d'alignement (60) comprend : au moins un point de verrouillage (34) pour le raccordement au moins un point de raccordement (14) sur le casque (10) ; et des moyens de détermination de la relation spatiale entre le au moins un point de raccordement (14) et les yeux de l'utilisateur.

**2.** Outil d'alignement (60) selon la revendication 1, dans lequel les moyens de détermination comprennent : des réticules de visée latérale droit et gauche (70) pour indiquer visuellement l'alignement du casque (10) sur les globes oculaires de l'utilisateur ; un dispositif d'ajustement de l'écart des yeux (72) pour ajuster sélectivement l'alignement longitudinal du casque (10) par rapport à la tête de l'utilisateur pour obtenir une alignement prédéterminé ; et des moyens pour déterminer un écart inter-pupillaire (IPD) d'un utilisateur portant le casque.

**3.** Outil d'alignement (60) selon la revendication 2, dans lequel lesdits moyens de détermination IPD comprennent une échelle IPD (66) pour fournir des informations de mesure IPD ; et des réticules de visée frontale droit et gauche (68r, 681) raccordés de manière fonctionnelle à ladite échelle IPD (66) pour fournir les informations de mesure IPD à l'utilisateur lorsque lesdits réticules de visée frontale droit et gauche (68r, 681) indiquent visuellement l'alignement du casque (10) sur les pupilles de l'utilisateur.

**4.** Outil d'alignement (60) selon la revendication 2, dans lequel ledit alignement prédéterminé est tangentiel à une partie frontale des globes oculaires de l'utilisateur.

**5.** Outil d'alignement (60) selon la revendication 1 pour aligner et positionner un affichage du système visuel monté sur un casque, dans lequel le casque (10) comporte une paire de points de raccordement opposés (14) pour recevoir et fixer le système visuel au casque (10) et dans lequel l'outil d'alignement (60) comprend : une paire de bras latéraux opposés (62) comportant chacun un point de verrouillage (34) pour le raccordement au point de raccordement correspondant (14) sur le casque (10) ; des réticules de visée latérale droit et gauche (70) raccordés auxdits bras latéraux pour indiquer visuellement l'alignement horizontal du casque (10) sur les globes oculaires de l'utilisateur ; une échelle IPD (66) pour fournir les informations de mesure IPD à l'utilisateur lorsque lesdits réticules de visée frontale droit et gauche (68r, 68l) raccordés de manière fonctionnelle à ladite échelle IPD (66) pour fournir les informations de mesure IPD à l'utilisateur lorsque lesdits réticules de visée frontale droit et gauche (68r, 681) indiquent visuellement l'alignement vertical du casque (10) sur les pupilles de l'utilisateur.

**6.** Outil d'alignement (60) selon la revendication 5 comprenant, en outre, un dispositif d'ajustement de l'écart des yeux (72) pour ajuster sélectivement l'alignement horizontal du casque (10) par rapport à la tête de l'utilisateur pour obtenir un alignement horizontal prédéterminé.

**7.** Outil d'alignement (60) selon la revendication 6, dans lequel ledit alignement horizontal prédéterminé est obtenu lorsque lesdits réticules de visée latérale droit et gauche (70) indiquent un alignement tangentiel sur une partie frontale des globes oculaires droit et gauche de l'utilisateur.

**8.** Outil d'alignement (60) selon la revendication 5, dans lequel ladite paire de bras latéraux opposés (62) et ladite échelle IPD (66) forment une configuration sensiblement en U pour l'outil (60).

**9.** Procédé de positionnement d'un affichage de casque S à une distance de visée $V_p$ d'une première ligne $E_L$ qui est tangente aux deux surfaces frontales des globes oculaires d'un observateur, **caractérisé en ce que** le procédé comprend les étapes consistant à : prévoir au moins un point de raccordement (14) sur le casque (10) définissant une ligne de raccordement $C_L$ s'étendant parallèlement à la première ligne $E_L$ et séparée de celle-ci par un premier vecteur $V_1$ ; prévoir un outil d'alignement (60) comportant au moins un point de verrouillage (34) définissant une ligne de verrouillage $L_L$ associée à l'affichage S défini par un second vecteur $V_2$ ; et monter l'outil d'alignement (60) sur le au moins un point de raccordement (14) sur le casque (10) pour aligner ladite ligne de verrouillage $L_L$ sur ladite ligne de raccordement $C_L$, dans lequel une différence entre lesdits premier et second vecteurs est appelée distance de visée $V_D$.

**10.** Procédé selon la revendication 9, dans lequel ladite distance de visée $V_D$ s'étend généralement le long d'une ligne de visée horizontale de l'observateur et dans lequel la ligne de visée est perpendiculaire à la première ligne $E_L$.

11. Procédé selon la revendication 9, dans lequel ledit premier vecteur $V_1$ et ledit second vecteur $V_2$ sont disposés dans un plan commun avec la ligne de visée horizontale et dans lequel lesdits premier et second vecteurs s'étendent perpendiculairement à la première ligne $E_L$.

12. Procédé selon la revendication 9, dans lequel les composantes verticales desdits premier et second vecteurs sont à peu près les mêmes.

13. Procédé selon la revendication 11, dans lequel une différence entre les composantes horizontales desdits premier et second vecteurs est égale à ladite distance de visée $V_D$.

14. Procédé selon la revendication 9, dans lequel ladite ligne de raccordement $C_L$ est placée au-dessus de la tête de l'observateur et à l'arrière des globes oculaires de l'observateur.

15. Procédé selon la revendication 9, dans lequel lesdits points de raccordement (14) comprennent des points de raccordement gauche et droit qui sont placés à l'intérieur de plans verticaux droit et gauche correspondants qui sont placés à distance vers l'extérieur de la tête de l'observateur.

16. Procédé selon la revendication 9, dans lequel lesdits points de verrouillage (34) comprennent des points de verrouillage gauche et droit qui pivotent à l'intérieur de plans verticaux droit et gauche correspondants qui sont placés à distance vers l'extérieur de la tête de l'observateur.

*Fig. 1A*

*Fig. 1B*

*Fig. 1C*

14

14b

14e

14a

Fig. 2A

34m(2)

34j

34m(1)

34k

34f

34f

34d

34i

34g

34e

34a

34

34b

34c

Fig. 2B

EP 1 180 337 B1

Fig. 3

FIG. 4

EP 1 180 337 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5584073 A

- US 5866826 A